Europäisches Patentamt

European Patent Office

Office européen des brevets

(11) Publication number: **0 345 985**
**A2**

# EUROPEAN PATENT APPLICATION

(21) Application number: 89305418.9

(22) Date of filing: 30.05.89

(51) Int. Cl.4: **H04B 3/00**

(30) Priority: 06.06.88 US 202854

(43) Date of publication of application:
**13.12.89 Bulletin 89/50**

(84) Designated Contracting States:
**DE FR GB IT SE**

(71) Applicant: TANDEM COMPUTERS
INCORPORATED
19333 Vallco Parkway
Cupertino California 95014(US)

(72) Inventor: Stettina, Robert J.
14231 TANDEM BOULEVARD
Austin Texas 78728(US)

(74) Representative: Ayers, Martyn Lewis Stanley
et al
J.A. KEMP & CO. 14 South Square Gray's Inn
London, WC1R 5EU(GB)

(54) Communication circuit connection.

(57) A system for forming N unique, independent 2-wire links between two communication nodes coupled by an n-wire conductive line where

$$N = \sum_{k=1}^{n-1} k; \text{ and}$$

The two wire links may be grouped to form N/2 unique, independent 4-wire links,

FIG._3.

EP 0 345 985 A2

# COMMUNICATION CIRCUIT CONNECTION

The invention relates generally to communications systems and more particularly to the formation of communication links between nodes of a system.

In many instances communication between two nodes in a communication system is supported by conductive lines including a selected number of wires.

These conductive lines are costly to manufacture, install, and maintain and are thus are a scarce resource to be utilized efficiently by the system. Generally, the number of transceivers at a given node is limited by the number of wire terminals available at the node.

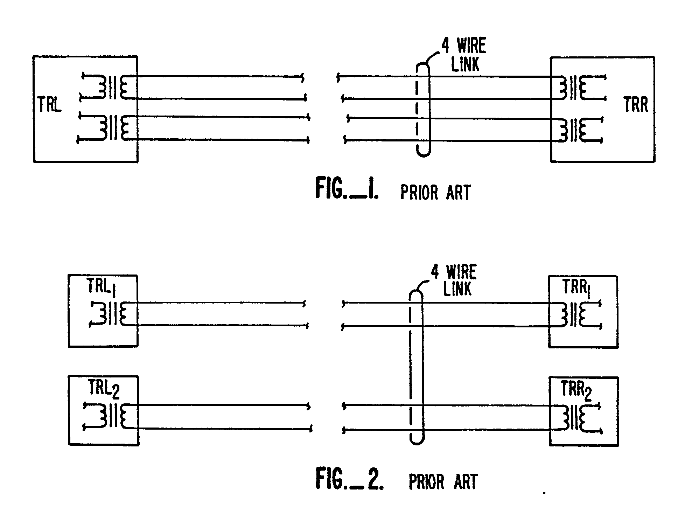

Figs. 1 and 2 are two examples of standard interconnections of transceivers to a 4-wire conductive line.

Fig. 1 depicts a 4-wire link that allows full-duplex communication between single transceivers at each node. Fig. 2 depicts a pair of half-duplex links between a pair of transceivers at each node.

For an N-wire conductive line, the number of transceivers that may be connected to the line is N/4 for full-duplex communication and N/2 for half-duplex.

Because of the small number of transceivers that may be connected to the conductive line, the availability of wires at a node is a major restriction to efficiently configuring a node. Accordingly, a system for more efficiently utilizing conductive lines is needed in the telecommunications industry.

The invention is a system for forming N independent 2-wire links between two communication nodes coupled by an n-wire conductive link. In general N is greater than n/2 and in a preferred embodiment N is equal to

$$N = \sum_{k=1}^{n-1} k,$$

that is, the maximum number of independent wire pairs that may be formed from a set of n wires.

In one embodiment, a matrix interconnect includes N taps and n contacts. Each contact is coupled to a different wire in the conductive line and each tap is coupled to unique pairs of contacts. Each tap is A.C. coupled to the transmit/receive (T/R) ports of an analog transceiver to electrically isolate the ports from the wire links.

According to a further aspect of the invention, a right-hand side (R.H.) matrix interconnect is coupled to the R.H. terminals of the n wires and a left-hand side (L.H.) matrix interconnect is coupled to the L.H. terminals of the wire, Corresponding R.H. and L.H. taps coupled to the same unique wire pair form a unique, independent 2-wire link.

According to a further aspect of the invention, pairs of corresponding taps are grouped to form unique, independent 4-wire links.

Additional advantages and features of the invention will be apparent in view of the drawings and following detailed description.

Fig. 1 is a schematic diagram of a 4-wire link.

Fig. 2 is a schematic diagram of a 2-wire link.

Fig. 3 is a schematic diagram of a preferred embodiment of the invention.

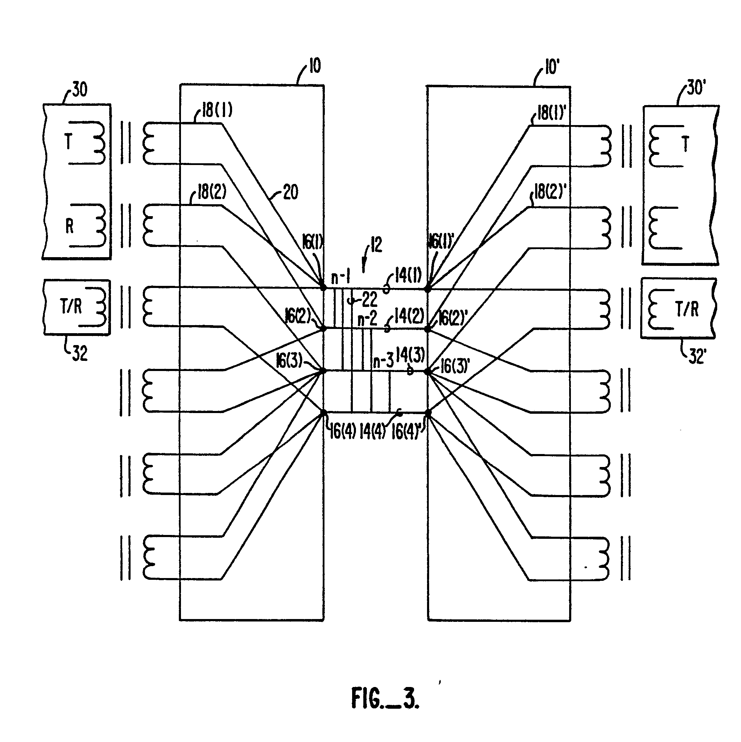

Fig. 3 is a schematic diagram of a preferred embodiment of the invention. A matrix interconnect 10 is connected to a 4-wire conductive line 12 including four wires 14(1), 14(2), 14(3), and 14(4). The matrix interconnect 10 has four contacts 16(1), 16(2), 16(3), and 16(4) connected to the left-hand terminals of corresponding wires 14(1) through 14-(4). These contacts 14 are connected to wire pair taps 18 by internal interconnects 20.

Each tap 18 is coupled to a unique pair of contacts 16 by the interconnects 20. For example, the uppermost tap 18, in Fig. 3, is coupled to contacts 16(1) and 16(2). This unique pair of contacts 16 is not coupled to any other tap 18. Similarly, every other tap 18 is coupled to a unique pair of contacts 16 that is not coupled to any other tap 18.

The number of taps 18 is equal to the maximum number of independent two wire pairs that may be formed from the four wires 14 in the conductive line 12. The formation and counting of these independent wire pairs is illustrated by the vertical lines 22 in Fig. 3.

The first wire 12(1) is connected to the second, third and fourth wires 12(2), 12(3), 12(4), respectively, to form n-1(=3) independent wire pairs. These wire pairs are coupled to the first three taps 18 of the matrix 10. The second wire 12(2) is connected to the third and fourth wires 12(3) and 12(4), respectively, to form n-2(=2) independent wire pairs. The third wire 12(3) is connected to the fourth wire 12(4) to form the last independent wire pair.

In general, for an n-wire conductive line 12, the n contacts are connected to N taps where

$$N = \sum_{k=1}^{n-1} k$$

As described, each tap 18 is connected to an independent wire pair in the conductive line via the contacts and internal interconnects 18 and 20.

In practice, either four line or two line analog transceivers 30 or 32 have their transmit and receive ports A.C. coupled to the taps 18 of the matrix interconnect. To implement a 4-wire link, the taps are paired, with a first tap in the pair A.C. coupled to the transmit output port 30(t) and a second tap in the pair is A.C. coupled to the receive input port 30(r). For a 2-wire link, a single tap is A.C. coupled to the T/R port 32(T/R).

In Fig. 3, identical L.H. and R.H. matrix interconnects 10 and 10' are coupled to the L.H. and R.H. terminals of wires 14 as described above. As is apparent from Fig. 3, either three independent 4-wire links or six independent 2-wire links may be formed. Each corresponding pair of taps in the R.H. and L H matrix interconnects 10 and 10', e.g. 18(1) and 18(1)', is coupled by a unique pair of wires 14 in the conductive line.

As noted above, each tap is D.C. isolated from its A.C. coupled analog transceiver T/R port. Because of this D.C. isolation, each independent one of the wire pairs may simultaneously transmit an A.C. signal with minimal crosstalk between the independent 2-wire links. Thus, three 4-wire or six 2-wire links may simultaneously operate between two nodes coupled by a 4-wire conductive line 12.

Accordingly, the matrix interconnect system described allows an n-wire conductive line to be coupled to N taps thereby maximizing the number of links formed via a 4-wire link. While the description of the matrix interconnect refers to a 4-wire conductive line, the principles of the invention are applicable to a generalized n-wire conductive line.

Although the foregoing invention has been described with respect to particular embodiments, these embodiments are not intended to limit the invention, but rather to clarify and explain it. The scope of the invention is to be determined from the appended claims.

## Claims

1. A system for forming N independent 2-wire links, between two communication nodes comprising:
an n-wire conductive line with each wire having a R.H. and a L.H. terminal, where N is greater than n/2;
a R.H. matrix interconnect having a set of N R.H. taps, with each R.H. tap coupled to the R.H. terminals of a unique pair of said wires in said n-wire conductive line, and
a L.H. matrix interconnect having a set of N L.H. taps, with each L.H. tap coupled to the L.H. terminals of a unique pair of said wires in said n-wire conductive line, with corresponding R.H. and L.H. taps coupled to the same unique pair of wires forming an independent 2-wire link between said corresponding taps.

2. The invention of claim 1 wherein: a set of two corresponding L.H. taps and corresponding R.H. taps are grouped to form an independent 4-wire link.

3. The invention of claim 1 or 2 where

$$N = \sum_{k=1}^{n-1} k$$

and

4. The invention of claim 3 further comprising pairs of analog transceivers having T/R ports and wherein said T/R ports are A.C. coupled to said taps so that said taps are D.C. isolated from said T/R ports thereby preventing significant crosstalk between said independent 2-wire links.

5. A matrix connector for connecting an n-wire conductive line to the ports of a set of transceivers comprising:
a set of n contacts, each contact adapted to couple one wire to the matrix connector;
a set of N taps, each tap adapted to couple the matrix connector to a port of a transceiver, where

$$N = \sum_{k=1}^{n-1} k;$$

and
a set of interconnects coupling each tap to a unique pair of contacts.

6. A system for forming N independent 2-wire links between two communication nodes, where each node includes an analog transceiver having a T/R port, said system comprising:
an n-wire conductive line with each wire having a R.H. and a L.H. terminal, when N is greater than n/2;
a R.H. matrix interconnect having a set of N R.H. taps, with each R.H. tap coupled to the R.H. terminals of a unique pair of said wires in said n-wire conductive line; and
a L.H. matrix interconnect having a set of N L.H. taps, with each L.H. tap coupled to the L.H. terminals of a unique pair of said wires in said n-wire conductive line, with corresponding R.H. and L.H. taps coupled to the same unique pair of wires to form an independent 2-wire link between said corresponding taps; and

means for A.C. coupling a selected tap to a T/R port to electrically isolate the T/R port from the 2-wire link coupled to said selected tap.

TRL

4 WIRE LINK

TRR

**FIG._I.**   PRIOR ART

TRL₁

TRL₂

4 WIRE LINK

TRR₁

TRR₂

**FIG._2.**   PRIOR ART

FIG._3.